Europäisches Patentamt

European Patent Office

Office européen des brevets

(11) Veröffentlichungsnummer: **0 396 060**

**A2**

## (12) EUROPÄISCHE PATENTANMELDUNG

(21) Anmeldenummer: **90108146.3**

(22) Anmeldetag: **28.04.90**

(51) Int. Cl.⁵: **B29C 33/12, B29C 35/04, //B29L30:00**

(30) Priorität: **02.05.89 DE 3914649**

(43) Veröffentlichungstag der Anmeldung:
**07.11.90 Patentblatt 90/45**

(84) Benannte Vertragsstaaten:
**BE DE FR IT LU**

(71) Anmelder: **A-Z Formen und Maschinenbau GmbH**
**Frohschammerstrasse 14**
**D-8000 München 40(DE)**

(72) Erfinder: **Hilke, Rainer**
**Waldstrasse 4**
**D-8137 Berg(DE)**
Erfinder: **Schmaderer, Gerhard**
**Bäumlstrasse 5**
**D-8490 Cham(DE)**

(74) Vertreter: **Baronetzky, Klaus et al**
**Patentanwalte Dipl.-Ing. R. Splanemann, Dr. B. Reitzner, Dipl.-Ing. K. Baronetzky Tal 13**
**D-8000 München 2(DE)**

(54) **Entlüftete Reifenform.**

(57) Bei einer entlüfteten Reifenform ist ein Segment-körper (12) vorgesehen, der eine die Lauffläche des Reifens ausbildende Fläche (26) aufweist und an den vorstehende Rippen einstückig angeformt sind. Diese Rippen weisen sich senkrecht oder schräg zur Fläche (26) erstreckende Seitenflächen (30) auf und dienen zur Ausbildung entsprechender Profile in der Lauffläche des Reifens. Dabei sind in der Fläche endende Entlüftungsschlitze dergestalt vorgesehen, daß in dem Segmentkörper (12) mindestens ein sich längs der Schnittlinie zwischen der Fläche (26) und der Seitenfläche (30) erstreckender Entlüftungsspalt (18) mit definierten Abmessungen eingearbeitet ist.

FIG. 2

Die Erfindung betrifft eine entlüftete Reifenform gemäß dem Oberbegriff von Anspruch 1 sowie einen Reifen gemäß dem Oberbegriff von Anspruch 10.

Derartige Reifenformen weisen an einem Segmentkörper ausgebildete Rippen auf, die an dem mit der Reifenform ausgebildeten Reifen eine entsprechende Profilrille oder -nut erzeugt. Eine derartige Reifenform muß eine Entlüftung während des Reifenpreßvorgangs ermöglichen, damit die in dem Profil eingeschlossene Luft während des Preßvorgangs abgeführt werden kann und eine gleichmäßige Reifenoberfläche entstehen kann.

Zur Entlüftung von Reifenformen ist es bekannt, an den Seitenflanken der Rippen des Formsegmentes eine schrägstehende Ausnehmung vorzusehen, in die die verbleibende Luft und stets auch ein Teil der Gummimischung eindringen kann. Beim Entformen soll der so entstandene Gummibutzen einseitig abgerissen werden. Während bei dieser Lösung separate Entlüftungskanäle vermieden werden können, besteht der Nachteil, daß die verbleibenden Gummibutzen mit einer Spezial-Trimm-Maschine am Reifen entfernt werden müssen, wie auch, daß die Reifenform nach jedem Preßvorgang gesäubert werden muß, um etwa dort verbleibende Reste zu entfernen.

Zur Vermeidung dieser Nachteile ist es bekannt geworden, die Reifenform mit Entlüftungslöchern zu versehen, die über einen an eine Unterdruckquelle angeschlossenen Entlüftungskanal miteinander verbunden sind. Bei einer derartigen Reifenform ist eine sichere Luftabführung jedoch nur bei sehr einfachen Profilschnitten möglich, die ohne Querrippen auskommen oder bei denen etwaige Lufteinschlüsse an Querrippen in Kauf genommen werden können.

Schließlich ist es bei Reifenformen, insbesondere für Reifen von Lastkraftwagen und größeren landwirtschaftlichen Nutzfahrzeugen bekannt geworden, die Rippen auf eine Lauffflächenform als separate Bauteile auf zuschrauben und am Fuße der Rippen je Entlüftungsschlitze vorzusehen. Reifenformen mit aufgenieteten oder aufgeschraubten Rippen sind jedoch vergleichsweise teuer in der Herstellung.

Ferner ist es bekannt geworden, die einzelnen Segmentkörper je vergleichsweise klein auszubilden, so daß eine Reifenform aus einer Vielzahl von Segmenten besteht. Die Entlüftung erfolgt dann je an den Anlageflächen der Segmentkörper, die nicht ganz dicht aneinander anschließen. Diese Entlüftungsart neigt jedoch zur Verstopfung, so daß nach einer vergleichsweise kurzen Gebrauchszeit die gesamte Reifenform auseinandergenommen und die einzelnen Segmentkörper je versäubert werden müssen.

Ferner ist es bekannt, in die Reifenform, die beispielsweise aus Aluminium bestehen kann, Lamellen aus einem anderen Material als Aluminium, beispielsweise Stahlblech, einzusetzen, und die durch die Herstellung bedingten Schlitze zwischen dem Lamelleneinsatz und der Form für die Entlüftung auszunutzen. Derartige Lamellen sind entweder als Profillamellen vorgesehen oder sind als reine Entlüftungslamelleneinsätze, beispielsweise am Fuß der Rippen vorgesehen, wobei die Lamelleneinsätze je dann bündig mit der Lauffläche enden sollten. Um für die Entlüftung ausreichende Schlitzquerschnitte bereitzustellen, müssen entweder eine Vielzahl von Entlüftungslamellen vorgesehen sein, was erheblichen Zusatzaufwand bedeutet, oder es muß versucht werden, eine ausreichende Schlitzbreite zu erzeugen.

Die Lamelleneinsätze neigen jedoch bei den sich über ihre ganze Länge erstreckenden Schlitzen dazu, sich zu lösen, so daß es ebenfalls bekannt geworden ist, durch in die Lamellen eingearbeitete Öffnungen beim Gießen der Form eine formschlüssige Verbindung zu erzeugen.

Ein Gesichtspunkt, der gegen die Verwendung der bekannten Lamelleneinsatzentlüftungen spricht, ist die Tatsache, daß die Schlitzbreite zwar gering gehalten werden kann, so daß in der Regel kein Gummi oder nur sehr wenig Gummi in die Entlüftungsschlitze eintritt, daß jedoch, wenn dies der Fall ist, dort entstandene, noch kleine Gummikerne bei der wiederholten Verwendung der Form zur Vergrößerung und damit schließlich zur Verstopfung neigen und daß zudem dann die Entfernung der dort befindlichen Gummireste aufgrund der guten Haftung in dem Schlitz sehr schwierig ist.

Diese formschlüssige Verbindung behindert andererseits die Entlüftung etwas und bildet vor allem ein praktisch nicht zu reinigendes Hindernis, wenn doch etwas Gummimischung in den Schlitz eingedrungen ist. Man ist daher wieder dazu übergegangen, an den kritischen Stellen, d.h., den Stellen, an denen Längs- und Querrippen spitzwinklig zusammenlaufen, Entlüftungsbohrungen vorzusehen, wobei das Entstehen von Gummizäpfchen in Kauf genommen wird, die dann mit einer entsprechenden Trimm-Maschine beseitigt werden können.

Daher liegt der Erfindung die Aufgabe zugrunde, eine entlüftete Reifenform gemäß dem Oberbegriff von Anspruch 1, sowie einen Reifen gemäß dem Oberbegriff von Anspruch 10 zu schaffen, die einen hinsichtlich der Entlüftung langen störungsfreien Betrieb ermöglichen und eine vergleichsweise leichte Reinigung erlauben, ohne daß eine Nachbearbeitung der Reifenfläche erforderlich wäre und ohne daß der optische Eindruck des fertiggestellten Reifens leidet.

Diese Aufgabe wird erfindungsgemäß durch Anspruch 1 bzw. 10 gelöst. Vorteilhafte Weiterbildungen ergeben sich aus den Unteransprüchen.

Durch die Verwendung der erfindungsgemäßen Entlüftungsspalte unmittelbar am Fuße der Rippen ist zunächst sichergestellt, daß ein Gummirest, der dort theoretisch entstehen könnte, an einer Profilkante entstehen würde und dementsprechend nahezu nicht zu entdecken wäre und insbesondere den optischen Eindruck des Reifens nicht beeinträchtigen würde. Dementsprechend können Schleifspuren aufgrund der Verwendung eines Trimmgeräts bereits vom Prinzip her vermieden werden.

Darüber hinausgehend ergibt sich durch die Einarbeitung des Entlüftungsspalts in den Segmentkörper aber der überraschende Vorteil, daß trotz günstigerer Herstellungskosten eine vollständig befriedigende Entlüftung möglich ist, die verstopfungsunanfällig ist und auch nicht zur Entstehung von Verstopfungskeimen neigt. Durch die definierten Abmessungen der erfindungsgemäßen Entlüftungsspalte weisen diese auch bei den gewünschten sehr schmalen Abmessungen, die das Eintreten der Gummimischung verhindern sollen, eine Form auf, die einen freien Durchtritt der Luft ermöglicht.

Die definierten Abmessungen erlauben es beispielseise, den Entlüftungsspalt im Querschnitt zur Formaußenseite hin zu vergrößern. Hierdurch ergibt sich dann bei einer etwa anstehenden Reinigung der Vorteil, daß der Entlüftungsspalt leicht von der Außenseite ausgeblasen werden kann, wobei ein bestehender Gummirest als Pfropfen rückstandsfrei ausgetrieben werden kann.

Während über entsprechende Mundstücke auch eine Reinigung bei durch den gesamten Segmentkörper mit gleichem Querschnitt durchgehenden Entlüftungsspalten durch Druckluftbeaufschlagung möglich ist, ist es besonders günstig, den Entlüftungsspalt in ein rundes Entlüftungsloch münden zu lassen, dessen Querschnittsfläche größer als die Querschnittsfläche des Entlüftungsspalts ist, da hierdurch die Verwendung handelsüblicher Mundstücke für eine Druckluftquelle möglich ist. Hierbei versteht es sich, daß die Entlüftungslöcher mit einer Fase versehen sein können, um den Anschluß des Mundstücks zu erleichtern.

Durch die sich längs der Schnittlinie zwischen der Fläche, die die Lauffläche des Reifens ausbildet, und der Seitenfläche der Rippen erstreckenden Entlüftungsspalte wird zudem die Ausbildung von Unebenheiten auf der Lauffläche selbst vermieden, die bislang bei der Verwendung von reinen Entlüftungslamelleneinsätzen nicht vermeidbar war, da beidseitig der Entlüftungslamelle Schlitze vorgesehen waren und zudem die Stirnfläche der Entlüftungslamelle selbst eine gewisse Unebenheit für die Reifenlauffläche bildete.

Erfindungsgemäß ist es ferner besonders günstig, daß die Nachteile des Standes der Technik vermeidbar sind. Es ist möglich, eine den Erfordernissen, also der beim Pressen bestehenden Viskosität der verwendeten Gummimischung angepaßte Spaltbreite zu verwenden, wobei es günstig ist, mit einer Spaltbreite von erheblich unter einem Millimeter zu arbeiten, jedoch die Spaltbreite größer als 0,1 mm zu wählen. Bei einfachen Profilen und kleineren Reifendurchmessern kann aber auch eine Spaltbreite von 0,05 mm geeignet sein.

Zweckmäßig ist es, einen im Querschnitt langgestreckt rechteckigen Entlüftungsspalt zu verwenden, wobei die konstante Breite über die Länge des Spaltes einerseits das Eintreten der Gummimischung verhindert und andererseits eine vergleichsweise große Entlüftungsöffnung bereitstellt.

Ferner ist es vorteilhaft, wenn der Spalt mit den definierten Abmessungen sich seitlich unmittelbar an die Rippen-Seitenfläche anschließt, während die der Lauffläche des Reifens entsprechende Fläche sich von der gegenüberliegenden Endfläche des Spaltes völlig glatt bis zur nächsten Rippe oder Lamelle erstreckt, die ebenfalls mit einem entsprechenden Entlüftungsspalt versehen sein kann.

Gemäß einer vorteilhaften Weiterbildung ist es vorgesehen, den Entlüftungsspalt im Prinzip rechteckig, jedoch mit ausgerundeten Ecken zu versehen. Im Extremfall läuft der Spalt in halbkreisförmigen Enden aus, was aus Gründen der Verstopfungsarmut günstig sein kann.

Gemäß einer weiteren vorteilhaften Ausgestaltung ist es vorgesehen, die Rippe seitlich mit einem Einsatz auszustatten, der allerdings in der Wandfläche der Rippe liegt und dementsprechend keine sichtbare Veränderung der Lauffläche des Reifens bewirkt. Dieser Einsatz kann sich anschließend an die Seitenfläche der Rippe nach außen erstrecken und so eine seitliche Begrenzungsfläche des Spalts bilden.

Gemäß einer weiteren, vorteilhaften Weiterbildung ist es vorgesehen, den Entlüftungsspalt in seiner Breite zur Reifenfläche hin verjüngt auszubilden, so daß sich der Entlüftungsspalt zur Außenseite der Form hin erweitert und zweckmäßig in ein kreisrundes Entlüftungsloch ausläuft. Es hat sich herausgestellt, die verjüngte Ausgestaltung des Entlüftungsspalts das Eindringen der Gummimischung verhindert bzw. erschwert, auch wenn eine relativ große Spaltbreite gewählt wird. Das Reinigen der Form kann sehr leicht durch Ausblasen erfolgen, wobei die gewünschte Pfropfwirkung ausnutzbar ist, daß nämlich der anstehende Gummirest als Ganzes ausblasbar ist. Etwaige Verunreinigungen lassen sich so durch Ausblasen und ohne mechanische Nachsäuberung entfernen.

Der gemäß einer weiteren vorteilhaften Ausgestaltung vorgesehene Grat an der Kante zwischen dem Spalt und der die Reifenfläche bildende Fläche der Reifenform führt nicht etwa zu einer sichtbaren Vertiefung in der Reifenfläche, sondern wirkt praktisch wie eine leichte Abschrägungen der Kante zwischen der Profilnut und der Lauffläche. Diese Abschrägung ist günstig, da zum einen ein etwa doch verbleibender Gummirest, bezogen auf die Lauffläche, auf ein tieferes Niveau gebracht wird, so daß er nicht vorsteht, und zum anderen ein gewisser Abrundungseffekt der Kante erreicht wird. Zudem bildet er praktisch eine Barriere gegen das Benetzen der Innenflächen des Spaltes.

Weitere Einzelheiten, Vorteile und Merkmale ergeben sich aus der nachfolgenden Beschreibung zweier Ausführungsbeispiele der Erfindung anhand der Zeichnung.

Es zeigen:

Fig 1 eine leicht schematisierte Ansicht eines Teils einer beispielhaften erfindungsgemäßen Reifenform, zur Darstellung der Anordnung der erfindungsgemäßen Entlüftungsspalte;

Fig. 2 einen Schnitt einer Ausführungsform eines erfindungsgemäßen, an einer Rippe vorgesehen Entlüftungsspalts entlang der Linie II-II in Fig. 1; und

Fig. 3 einen Schnitt einer weiteren Ausführungsform des Entlüftungsspalts gemäß Fig. 2.

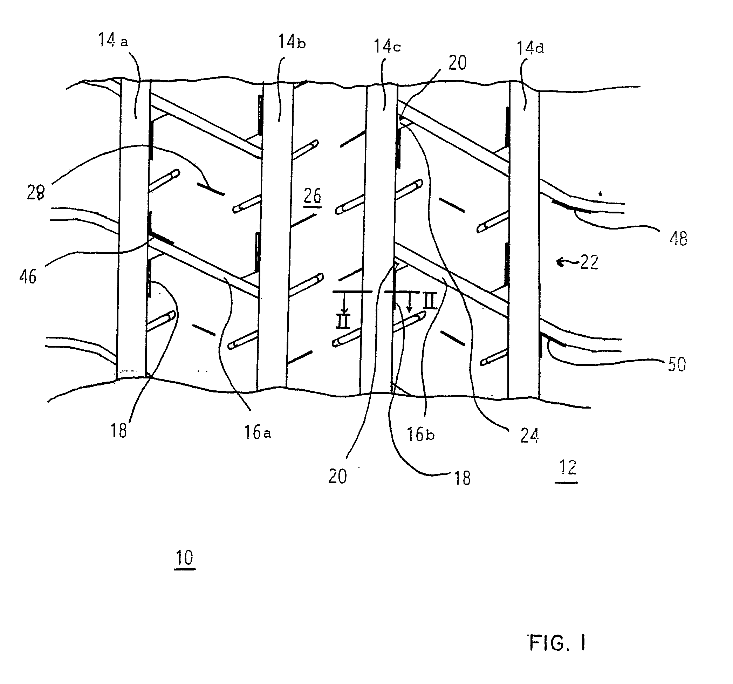

Eine Reifenform 10, von der in Fig. 1 ein Segmentkörper 12 als Ausschnitt dargestellt ist, weist an seinem Innenumfang Längsrippen 14a bis 14d auf, zwischen denen sich Querrippen 16a und 16b erstrecken. Die Darstellung des durch die Längsrippen 14a bis 14d und die Querrippen 16a und 16b gebildeten Profils der Reifenform 10 erfolgt beispielhaft, so daß es ohne weiteres möglich ist, beliebige andere Profile mit erfindungsgemäßen Entlüftungsspalten 18 zu versehen, von denen in Fig. 1 eine Mehrzahl dargestellt ist.

Wie ersichtlich ist, erstrecken sich die Entlüftungsspalte 18 überwiegend entlang der Längsrippen 14a bis 14d und der Querrippen 16a und 16b, und zwar in der Nähe von Profilecken 20, in welchen je eine Längsrippe 14c und eine Querrippe 16b spitzwinklig zusammenlaufen. Die Profilecke 20 zeigt bei dem dargestellten Profil 22 eine Schrägfläche 24 auf, die das Brechen der entsprechenden Profilecken des fertiggepreßten Reifens verhindern soll. Unmittelbar anschließend an die Schrägfläche 24 erstreckt sich der Entlüftungsspalt 18, so daß die Stelle, die am ehesten zu Lufteinschlüssen neigt, entlüftet wird.

Insgesamt erstrecken sich die Entlüftungsspalte 18 nur über einen Teil der zwischen den Rippen und einer der Lauffläche des Reifens entsprechenden Fläche 26 gebildeten Kanten. Günstigerweise läßt sich die Lage der Entlüftungsspalte 18 jedoch beliebig wählen und je an die bestehenden Erfordernisse anpassen.

Die Ausführungsform des Segmentkörpers 12 gemäß Fig. 1 weist ferner Lamellen 28 auf, die ebenfalls in den Aluminiumguß des Segmentkörpers 12 eingearbeitete Entlüftungsspalte 18 aufweisen können.

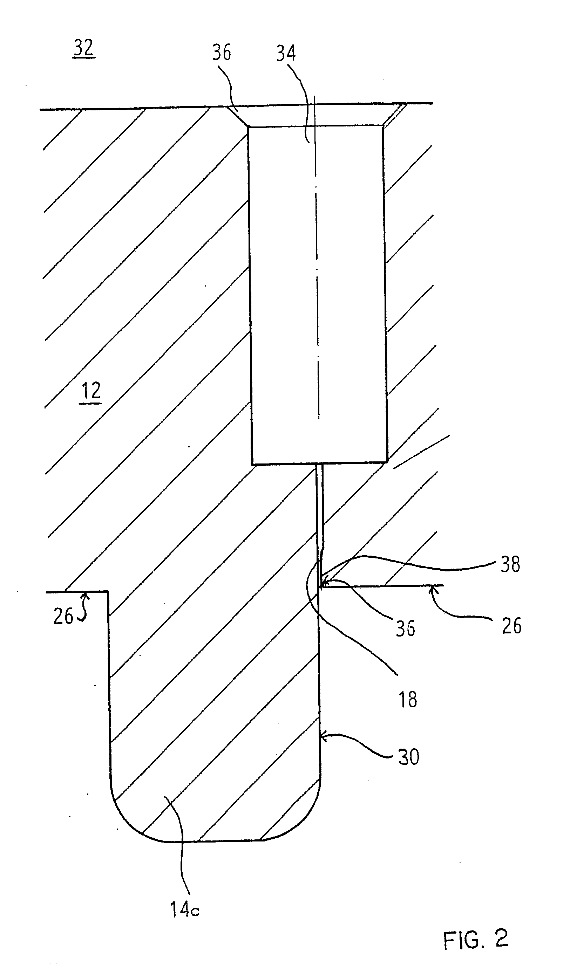

In Fig. 2 ist die Ausbildung eines erfindungsgemäßen Entlüftungsspalts 18 im Schnitt dargestellt. In der Verlängerung einer Seitenfläche 30 einer Rippe 14 erstreckt sich der Entlüftungsspalt 18 nach außen, d.h., zu einer Außenseite 32 des Segmentkörpers 12. An den Entlüftungsspalt 18 anschließend ist ein Entlüftungsloch 34 vorgesehen, dessen Radius die Breite des Entlüftungsspalts 18 erheblich übersteigt und dessen Querschnittsfläche ebenfalls größer als die Querschnittfläche des Entlüftungsspalts 18 ist.

Das Entlüftungsloch 34 ist außen mit einer Fase 36 versehen.

Wie aus Fig. 2 ebenfalls ersichtlich ist, ist der Spalt zur Fläche 26 hin verjüngt und weist unmittelbar angrenzend an eine zwischen dem Entlüftungsspalt 18 und der Fläche 26 gebildete Kante 36 eine Engstelle 38 auf, die über die entlang der Längsrippe 14 eine im wesentlichen konstante Breite aufweist und eine Sperre für das Eintreten der Gummimischung bildet.

Hier wie in den weiteren Figuren weisen gleiche oder ähnliche Bezugszeichen auf gleiche oder ähnliche Teile hin und bedürfen keiner weiteren Erläuterung.

Wie aus Fig. 2 ebenfalls ersichtlich ist, ist der Bereich der Fläche 26, der sich an die Kante 36 anschließt, abgesehen von der Mikrorauhigkeit der inneren Oberfläche des Segmentkörpers 12 völlig eben. Dies bedingt eine entsprechend ebene Lauffläche des fertiggestellten Reifens, ohne daß Entlüftungszäpfchen od. dgl. auf dem Reifen ersichtlich wären.

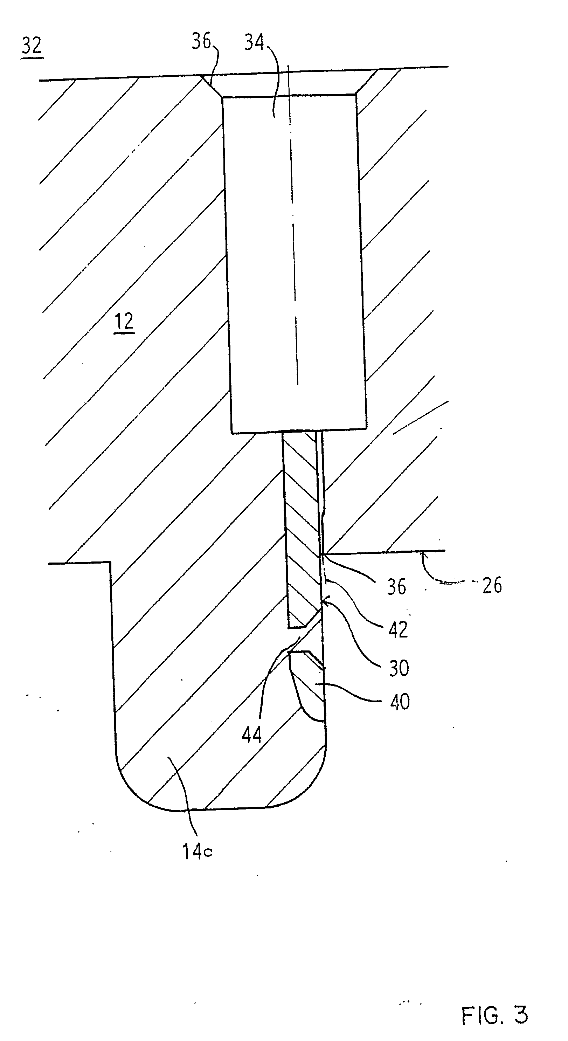

In dem in Fig. 3 dargestellten weiteren Ausführungsbeispiel ist ein Blechstreifen 40 aus einem gegenüber dem Material des Segmentkörpers 12 härteren Material eingegossen und bildet so die Seitenfläche 30 der Rippe 14c an der an den Entlüftungsspalt 18 angrenzenden Seite der Rippe 14. Durch eine derartige Maßnahme läßt sich die gewünschte Spaltbreite noch exakter tolerieren.

Ferner ist es auch günstig, daß die Oberfläche des Blechstreifens 40 ziemlich glatt gehalten sein kann, so daß die für den Reifen verwendete Gummimischung nicht dazu neigt, dort zu haften.

Die Erfindung ist nicht auf die Ausbildung der Entlüftungsspalte 18 an den Längsrippen 14a bis 14d beschränkt. Vielmehr ist es ohne weiteres möglich, einen entsprechenden Entlüftungsspalt 18 an einer beliebigen anderen Stelle in den Formkörper 12 einzuarbeiten und die erwünschte Entlüftung sicherzustellen.

Durch die Anordnung entlang einer Schnittlinie 42 zwischen der Fläche 26 und der Seitenfläche 30 der Querrippe 14c wird die Sichtbarkeit von Entlüftungszäpfchen deutlich vermindert oder ausgeschaltet, wobei aufgrund der vorgegebenen Abmessung des Spaltes das Eintreten der Gummimischung in den Entlüftungsspalt 18 zumindest herabgesetzt und gegebenenfalls völlig verhindert wird.

Wie aus Fig. 3 ersichtlich ist, ist der Blechstreifen 40 mit einer Durchtrittsausnehmung 44 versehen, die mit dem Aluminiummaterial des Segmentkörpers einstückig ausgefüllt ist. Durch diese Durchtrittsausnehmung 44 ist der Blechstreifen 40 an der gewünschten Stelle fixiert, ohne daß durch diese Befestigungsmaßnahme die Entlüftung durch den Entlüftungsspalt 18 beeinträchtigt wäre. Selbstverständlich ist es möglich, eine Mehrzahl von entsprechenden Durchtrittsausnehmungen längs des Blechstreifens 40 vorzusehen.

Ferner ist es möglich, nicht nur gerade, sondern auch gekrümmte Entlüftungsspalte zu verwenden, wozu auf die Darstellung gemäß Fig. 1 und den dortigen Entlüftungsspalt 46 zu verweisen ist. Die Ausgestaltung des Entlüftungsspalts 46 ist hierbei besonders günstig, da beim Pressen des Reifens die Luft sich gerne an den Innenseiten der Längsrippen 14a bzw. 14d fängt. Dies ist darauf zurückzuführen, daß die Gummimischung beim Pressen zunächst im Bereich der inneren Längsrippen 14b und 14c in Anlage mit der Form gerät. Durch Entlüftungsspalte wie den Entlüftungsspalt 46, aber auch durch die Entlüftungsspalte 48 bzw. 50 entlang der äußeren Querrippen, ist die Wahrscheinlichkeit, daß noch Lufteinschlüsse auftreten können, erheblich reduziert. Es ist wesentlich, daß die erfindungsgemäße Entlüftungsspalte an beliebigen Stellen an den Rippen vorgesehen sein können.

Ein weiterer besonderer Vorteil gegenüber dem bislang bekannten Stand der Technik, bei welchem Bohrungen an den Ecken vorgesehen waren, leitet sich daraus ab, daß die erfindungsgemäßen Entlüftungsspalte exakt in der Kante zwischen Rippe und Lauffläche angeordnet sein können: bislang war es praktisch nicht möglich, beispielsweise Bohrungen von 0,6 mm Durchmesser anzufertigen. Vielmehr wurden Bohrungen mit größerem Durchmesser ausgebildet, in welche dann Stahlröllchen als Düsen eingesetzt wurden, deren Innendurchmesser beispielsweise 0,6 mm betrug. Durch diese Ausbildung bedingt, befand sich die Düsenöffnung nicht exakt im Eckbereich, so daß die Entlüftung nicht optimal war.

Ferner ist es besonders günstig, daß die erfindungsgemäßen Entlüftungsspalte sowohl an Einzelsegmenten, an sektorförmigen Formsegmenten, aber auch an kompletten Ringen vorgesehen sein können. Obwohl die Ausgestaltung mit dem im Bereich der Lauffläche 26 vergleichsweise schmalen Entlüftungsspalt, der nach außen, also zum Entlüftungsloch 34 hin, einen größeren Querschnitt aufweist, bevorzugt ist, ist es ohne weiteres möglich, den Entlüftungsspalt 18 gerade auszubilden, so daß sich seine Breite nicht ändert.

**Ansprüche**

1. Entlüftete Reifenform, die eine die Lauffläche des Reifens ausbildende Fläche aufweist, die an einem Segmentkörper ausgebildet ist, wobei an den Segmentkörper vorstehende Rippen einstückig angeformt sind, mit welchen entsprechende Profile in der Lauffläche des Reifens ausbildbar sind und die Rippe sich im wesentlichen senkrecht oder schräg zur Fläche erstreckende Seitenflächen aufweist, wobei in der Fläche endende Entlüftungsschlitze vorgesehen sind, dadurch **gekennzeichnet**, daß in dem Segmentkörper (12) mindestens ein sich längs der Schnittlinie (42) zwischen der Fläche (26) und der Seitenfläche (30) erstreckender Entlüftungsspalt (18) mit definierten Abmessungen eingearbeitet ist.

2. Reifenform nach Anspruch 1, dadurch gekennzeichnet, daß der Spalt (18) an seinem der Fläche (26) und der Seitenfläche (30) benachbarten Ende eine Breite von mindestens 0,1 mm aufweist.

3. Reifenform nach einem der vorhergehenden Ansprüche, dadurch gekennzeichnet, daß der Entlüftungsspalt (18) in ein Entlüftungsloch (34) mündet, dessen Querschnittsfläche größer als die durchschnittliche Fläche des Spalts (18) und erheblich größer als die Fläche des Spalts (18) an dessen engster Stelle (38) ist.

4. Reifenform nach einem der vorhergehenden Ansprüche, dadurch gekennzeichnet, daß an der den Spalt (18) begrenzenden Kante (36) zwischen der Fläche (26) und dem Spalt (18) ein sehr klein ausgebildeter Grat belassen ist.

5. Reifenform nach einem der vorhergehenden Ansprüche, dadurch gekennzeichnet, daß längs der Rippe (14c) ein sich über den Spalt (18) hinaus erstreckendes Blech (40) eingelassen ist, dessen Oberfläche die Seitenfläche (30) bildet.

6. Reifenform nach einem der vorhergehenden Ansprüche, dadurch gekennzeichnet, daß ein in die Rippe (14c) eingelassenes und die Seitenfläche (30) der Rippe (14c) bildendes Blech (40) eine zum Körper der Rippe offene Durchtrittsausnehmung (44) aufweist, die von dem Entlüftungsspalt (18) beabstandet ist.

7. Reifenform nach einem der vorhergehenden Ansprüche, dadurch gekennzeichnet, daß der Entlüftungsspalt (18) auf der Reifenoberfläche an einer beliebigen Stelle vorgesehen ist und sich insbesondere entlang einer Längsrippe (14a bis 14d) erstreckt.

8. Reifenform nach einem der vorhergehenden Ansprüche, dadurch gekennzeichnet, daß der Entlüftungsspalt (18) sich über einen Teil an einer beliebigen Stelle der sich zwischen Querrippen (16a, 16b) erstreckenden Längsrippe (14a bis 14d) in Reifenumfangsrichtung gesehen oder 90° davon erstreckt und insbesondere einer spitzwinkligen angeklinkten Ecke (20) zwischen Längs- (14a bis 14d) und Querrippe (16a, 16b) benachbart ist.

9. Reifenform nach einem der vorhergehenden Ansprüche, dadurch gekennzeichnet, daß die Entlüftungsspalte (18) unmittelbar am Fuß der Rippen (14) münden und die Achsen der Entlüftungsspalte (18) sich im wesentlichen in der Verlängerung der Seitenflächen (30) der Rippen (14c) erstrecken.

10. Reifen mit einer profilierten Lauffläche, dadurch gekennzeichnet, daß die Lauffläche durch eine Reifenform ausgebildet ist, die die Merkmale eines der vorhergehenden Ansprüche aufweist.

14 a     14b     14c     20     14d

20     26     22     48

28     46     18     16a     20     16b     18     24     50     12

10

FIG. I

FIG. 2

FIG. 3